# EUROPEAN PATENT APPLICATION

(11) **EP 4 704 315 A1**
(43) Date of publication of application: **04.03.2026**
(21) Application number: 24196948.4
(22) Date of filing: 28.08.2024
(51) Int. Cl.: H02M 1/00, H02M 1/14, H02M 1/42, H02M 3/00, H02M 3/335, H02M 3/28

(54) **A POWER SUPPLY INCLUDING A POWER PULSATION BUFFER**

(71) Applicant: Infineon Technologies Austria AG, 9500 Villach (AT)
(72) Inventor: WATTENBERG, Martin, 9500 Villach (AT); KASPER, Matthias Joachim, 9500 Villach (AT); PEVERE, Alessandro, 9500 Villach (AT); DEBOY, Gerald Josef, 9061 Klagenfurt (AT)
(74) Representative: Elkington and Fife LLP

(57) **Abstract**

The disclosed concepts relate to a power supply incorporating a power pulsation buffer (PPB). The power supply comprises a power factor correction (PFC) stage including a DC-link capacitor, and an unregulated DC-DC converter that receives the DC-link voltage across the DC-link capacitor and generates an output voltage. The PPB is connected between the PFC stage and unregulated DC-DC converter, and comprises a buffer capacitor. The PFC stage is configured to regulate a voltage across the buffer capacitor, and the PPB is configured to regulate the DC-link voltage across the DC-link capacitor. As a result, the voltage across the DC-link capacitor may be maintained at a near-constant value, whilst the voltage across the buffer capacitor varies. This means that the DC-DC converter may be unregulated, efficient and highly compact, as an input voltage is closely regulated.

## Description

### FIELD OF THE INVENTION

The present disclosure generally relates to power supplies, and more particularly power supplies that utilize a power pulsation buffer (PPB).

### BACKGROUND OF THE INVENTION

Traditional single-phase AC-connected power supplies generally control the output voltage in a two-stage approach. Firstly, an AC-DC power factor correction (PFC) rectifier boosts the AC input to a DC link voltage, which is typically between 380V to 400V. Due to the inherent double-line frequency power pulsation of the PFC stage, a voltage ripple is present on top of the DC-link voltage. This voltage ripple is dependent on the DC-link capacitor size. Then, a second regulated and isolated DC-DC converter converts the (pulsating) DC-link voltage to the desired fixed (isolated) output voltage.

However, there are many problems associated with these traditional power supplies. For one, power density is limited because the DC-link capacitor must be sized large enough to limit the voltage ripple on the DC-link during normal operation and also to provide enough energy storage during line dropout, which is typically between 10 to 20ms. During the dropout, the DC-link voltage must not drop below the lower limit of the input voltage of the DC-DC converter.

Furthermore, both the PFC rectifier and the DC-DC converter require regulation. Each stage processes the full power, which reduces the overall system efficiency. This also provides redundant control complexity, especially when PFC stage and the DC-DC stage are implemented fully independent from each other. Indeed, it is usually the case that both stages are each controlled by a different dedicated analog or digital controller. This can further increase the size and cost of the power supply.

Accordingly, there exists a need for a single-phase AC-connected power supply having a high efficiency, small size, and reduced cost.

### SUMMARY OF THE INVENTION

According to one aspect of the invention, there is provided a power supply.

The power supply comprises a power factor correction (PFC) stage comprising an input node configured to receive an AC input voltage, a PFC switch arrangement configured to generate an intermediate voltage based on the received AC input voltage, and a DC-link capacitor connected across the PFC switch arrangement. The power supply also comprises an unregulated DC-DC converter configured to receive a DC-link voltage across the DC-link capacitor and to generate an output voltage. Further, the power supply comprises a power pulsation buffer (PPB) connected between the PFC stage and the unregulated DC-DC converter, the PPB comprising a buffer capacitor, an inductor, and a PPB switch arrangement configured to control current flowing through buffer capacitor and the inductor. The PFC stage is configured to regulate a voltage across the buffer capacitor and the PPB is configured to regulate the DC-link voltage across the DC-link capacitor.

According to another aspect of the present disclosure, there is provided a controller for a power supply as described above. The controller is configured to control the PFC switch arrangement to regulate the voltage across the buffer capacitor; and control the PPB switch arrangement to regulate the voltage across the DC-link capacitor.

According to yet another aspect of the present disclosure, a controller for a power supply as described above is provided. The controller is configured to generate a high frequency power signal describing high frequency components of a power reference signal describing a target power to provide to the load and a low frequency power signal describing low frequency components of a power reference signal; control the PPB switch arrangement based on the high frequency power signal; and control the PFC switch arrangement based on the low frequency power signal.

According to a further aspect of the present disclosure, there is provided a method for controlling a power supply as described above. The method comprises controlling the PFC switch arrangement to regulate the voltage across the buffer capacitor; and controlling the PPB switch arrangement to regulate the voltage across the DC-link capacitor.

According to additional aspects of the present disclosure, a method for controlling a power supply as described above is provided. The method comprises processing a power reference signal describing a target power to provide to a load connected to the power supply, to generate a high frequency power signal describing high frequency components of the power reference signal and a low frequency power signal describing low frequency components of the power reference signal; controlling the PPB switch arrangement based on the high frequency power signal; and controlling the PFC switch arrangement based on the low frequency power signal.

Those skilled in the art will recognize additional features and advantages upon reading the following detailed description, and upon viewing the accompanying drawings.

### BRIEF DESCRIPTION OF THE DRAWINGS

The invention will now be described by way of example with reference to the accompanying drawings, in which:
FIG. 1 depicts a generalized block diagram of a known power supply;
FIG. 2 depicts a generalized block diagram of a power supply according to an embodiment of the invention;
FIG. 3 shows a circuit diagram of a power supply according to aspects of the present disclosure;
FIG. 4 presents simulation results of the circuit depicted in FIG. 3;
FIG. 5 shows a circuit diagram of a power supply according to further aspects of the present disclosure; and
FIG. 6 presents a flow diagram of a method for controlling a power supply according to an embodiment of the invention.

It should be noted that these figures are diagrammatic and not drawn to scale. Relative dimensions and proportions of parts of these figures have been shown exaggerated or reduced in size, for the sake of clarity and convenience in the drawings.

### DETAILED DESCRIPTION

The following description sets forth exemplary aspects of the present disclosure. It should be recognized, however, that such description is not intended as a limitation on the scope of the present disclosure. Rather, the description also encompasses combinations and modifications to those exemplary aspects described herein.

The disclosed concepts relate to a power supply incorporating a power pulsation buffer (PPB). The power supply comprises a power factor correction (PFC) stage including a DC-link capacitor, and an unregulated DC-DC converter that receives the DC-link voltage across the DC-link capacitor and generates an output voltage. The PPB is connected between the PFC stage and unregulated DC-DC converter, and comprises a buffer capacitor. The PFC stage is configured to regulate a voltage across the buffer capacitor, and the PPB is configured to regulate the DC-link voltage across the DC-link capacitor. As a result, the voltage across the DC-link capacitor may be maintained at a near-constant value, whilst the voltage across the buffer capacitor varies. This means that that the DC-DC converter may be unregulated, efficient and highly compact, as an input voltage is closely regulated.

The proposed power supply may be compact, efficient and have a simplified control scheme compared to traditional AC-DC power supplies. Specifically, by providing a PPB that is configured to regulate the voltage across the DC-link capacitor of the PFC, the DC-DC converter may be unregulated. That is, because the voltage across the DC-link capacitor is closely regulated by the PPB, the DC-DC converter may operate in a substantially fixed conversion mode (i.e., may provide a fixed conversion ratio between the DC-link voltage and the output voltage) whilst providing a stable output voltage. Of course, this is also enabled by the control scheme which controls the PPB to regulate the voltage across the DC-link capacitor, and the PFC to regulate the voltage across the buffer capacitor of the PPB.

As the double-line frequency power pulsation of the PFC is buffered by the buffer capacitor (leading to a large voltage variation of the buffer capacitor), and not by the DC-link capacitor, the DC-link voltage can be kept at a tightly regulated value. Accordingly, the DC-DC converter may be unregulated, and therefore may operate with a substantially fixed conversion ratio (e.g., at a substantially fixed frequency of a resonant DC-DC converter).

Overall, the proposed solution provides a power supply with improved power density by virtue of the reduced requirement for the size of the DC-link capacitor as well as the buffer capacitor. The power supply may also be more efficient, as the DC-DC converter may operate in a narrow range corresponding to ideal operating conditions of the DC-DC converter. Furthermore, as frequency control of the DC-DC converter is not required, complexity and computational effort may be reduced.

In some embodiments, the PPB may be connected in parallel with the PFC stage and the unregulated DC-DC converter.

More specifically, the PPB may be connected in a buck configuration. In this case, the PPB switching arrangement may comprise a high-side switch and a low-side switch connected in series across the DC-link capacitor, and the buffer capacitor and the inductor are connected in series across the low-side switch.

Furthermore, the power supply may comprise a plurality of unregulated DC-DC converters, each configured to receive the DC-link voltage across the DC-link capacitor and to generate an output voltage. The PPB may be connected in series between the PFC stage and each respective one of the unregulated DC-DC converters, and comprises a buffer capacitor, an inductor for each of the respective DC-DC converters, and a PPB switch arrangement configured to control current flowing through buffer capacitor and the inductors.

In some embodiments, the PPB is configured to regulate a voltage provided to each DC-DC converter. In some embodiments, an output of each unregulated DC-DC converter may be connected to a common output node. Furthermore, the PFC stage may be a full-bridge PFC stage.

In some embodiments, the unregulated DC-DC converter may comprise a switching bridge configured to receive the DC-link voltage across the DC-link capacitor and generate an alternating voltage based on the DC-link voltage, wherein the switching bridge is configured to operate at a substantially fixed frequency. The DC-DC converter may also comprise a transmitter circuit comprising a transformer including a primary side winding and a secondary side winding, and a resonant tank connected between the switching bridge and the primary side winding, the transmitter circuit configured to receive the alternating voltage, and to generate a further alternating voltage on the secondary winding based on the received alternating voltage. A rectifier circuit may also be provided as part of the unregulated DC-DC converter, and may be configured to receive the further alternating voltage, and to generate an output voltage based on the further alternating intermediate voltage.

The resonant tank may comprise a resonant capacitor and a resonant inductor connected in series with the primary winding. The rectifier circuit may be a full-bridge rectifier circuit. The switching bridge may be a full-bridge switching circuit.

According to another aspect of the present disclosure, there is provided a controller for a power supply as described above. The controller is configured to control the PFC switch arrangement to regulate the voltage across the buffer capacitor; and control the PPB switch arrangement to regulate the voltage across the DC-link capacitor.

In some embodiments, the controller may be configured to control the PFC switch arrangement based on a measured value of the voltage across the buffer capacitor and a target buffer voltage value.

The controller may be configured to generate a power reference signal based on a difference between the measured value of the voltage across the buffer capacitor and a target buffer voltage value; determine a target current signal describing a target current flowing through the PFC; and control the PFC switch arrangement based on the target current signal.

In some cases, the output of the unregulated DC-DC converter may be connected to a load. In this instance, the controller may be configured to control the PFC switch arrangement based on a power required by the output load.

Additionally, the controller may be configured to control the PFC switch arrangement based on the measured value of the voltage across the buffer capacitor and a target buffer voltage value; and adjust the target buffer voltage value based on the power required by the output load;

In some embodiments, the controller may also be configured to control the PPB switch arrangement based on a measured value of output voltage and a target output voltage value.

Specifically, the controller may be configured to generate a power reference signal based on a difference between the measured value of output voltage and a target output voltage value; determine a target current signal describing a target current flowing through the inductor; and control the PPB switch arrangement based on the target current signal.

The disclosed concepts also provide a controller for a power supply as described above. The controller is configured to generate a high frequency power signal describing high frequency components of a power reference signal describing a target power to provide to the load and a low frequency power signal describing low frequency components of a power reference signal; control the PPB switch arrangement based on the high frequency power signal; and control the PFC switch arrangement based on the low frequency power signal.

In some cases, the controller may be configured to generate, based on a measured value of the output voltage, the power reference signal. Further, the controller may be configured to control the PPB switch arrangement further based on a target buffer voltage value. Alternatively, the controller may be configured to control the PPB switch arrangement further based on an AC power feedforward signal describing an expected power fluctuation of the PFC stage.

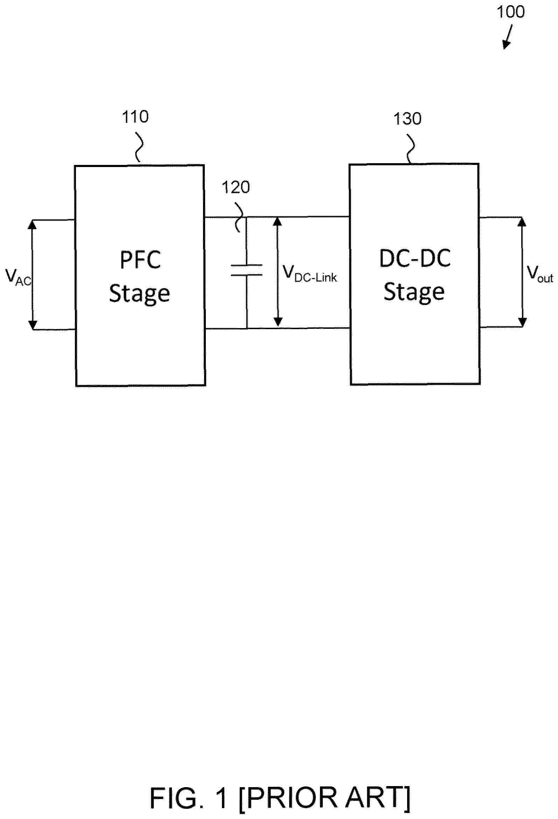

To best appreciate the invention, it is important to understand the operation of traditional power supplies and their control schemes. To this end, Fig. 1 provides a simplified block diagram of a known AC-DC power supply 100.

As shown, traditional single-phase AC-connected power supplies often employ a two stage approach to control the output voltage. Firstly, the AC voltage (V_{AC}) is input to an AC-DC PFC rectifier 110. The PFC rectifier 110 boosts the AC input via a switching arrangement to a DC-link voltage (V_{DC-Link}) across a DC-link capacitor 120. Typically, the DC-link voltage is between 380V to 400V. Due to the inherent double-line frequency power pulsation of the PFC stage 110, a voltage ripple is present on top of the DC-link voltage, which also depends on the DC-link capacitor 120 size. That is, a larger DC-link capacitor 120 results in a lower the voltage ripple present on top of the DC-link voltage. This is desirable for a stable output voltage and control of the DC-DC converter 130, and therefore this DC-link capacitor 120 is typically very large.

The DC-DC converter 130 is provided to convert the DC-link voltage to a substantially fixed output voltage (Vₒᵤₜ). The DC-DC converter 130 usually provides an output voltage of approximately 48V. The DC-DC converter 130 is usually regulated (i.e., comprises one or more switching elements that are actively controlled based on a feedback loop) to ensure a stable output. Furthermore, the DC-DC converter 130 is usually isolated. For example, the DC-DC converter 130 may be a regulated LLC converter or DAB converter that can operate over a wide range.

The traditional power supply 100 has a few drawbacks. In particular, the power density of the power supply 100 is limited because the DC-link capacitor 120 must be sized large enough to limit the voltage ripple on the DC-link during normal operation. The DC-link capacitor 120 must also be large enough to provide energy storage during line dropout, during which the DC-link voltage can't drop below the lower limit of the input voltage of the DC-DC stage 130.

In addition, the power supply 100 has two fully regulated stages. That is, both the PFC stage 110 and the DC-DC converter 130 must be closely regulated to ensure efficient power conversion provided at a substantially fixed output voltage. This increases the footprint of the system, and also reduces efficiency of the system, particularly when the DC-DC converter 130 is operating in non-optimal conditions (e.g., when the DC-DC converter 130 is an LLC converter, and is operating in non-resonant conditions to provide the appropriate output voltage). In essence this results in redundant controls that are very complex, especially when the stages are implemented fully independent from each other.

To address these problems, the disclosed concepts provide a PPB connected between the PFC stage and the DC-DC converter. The PPB regulates the voltage across the DC-link capacitor, and therefore may hold the DC-link voltage to a substantially constant value. Accordingly, the DC-DC converter may be unregulated whilst still providing a substantially fixed output voltage. That is, the DC-DC converter may provide a fixed conversion ratio between the DC-link voltage and the output voltage, and the DC-link voltage may be substantially fixed by the PPB.

As the voltage ripple and the line-drop out conditions are handled by the PPB (and more specifically, the buffer capacitor of the PPB), the DC-link capacitor may be reduced in size. This can lead to an increased power density of the PFC stage, and thus of the power converter.

Furthermore, as the DC-DC converter may be unregulated, the DC-DC converter may be highly efficient and compact, whilst requiring little to no active control. In other words, an unregulated DC-DC converter operating in a narrow range is more efficient, compact and has a higher power density than a regulated DC-DC converter (such as an LLC converter) operating over a wide range. Holistic and integrated control is instead provided by the PPB for the output voltage of the DC-DC stage converter, enabled by the fast dynamic response of the PPB. Also, as there is no frequency control needed for the DC-DC converter, computational effort and complexity is reduced.

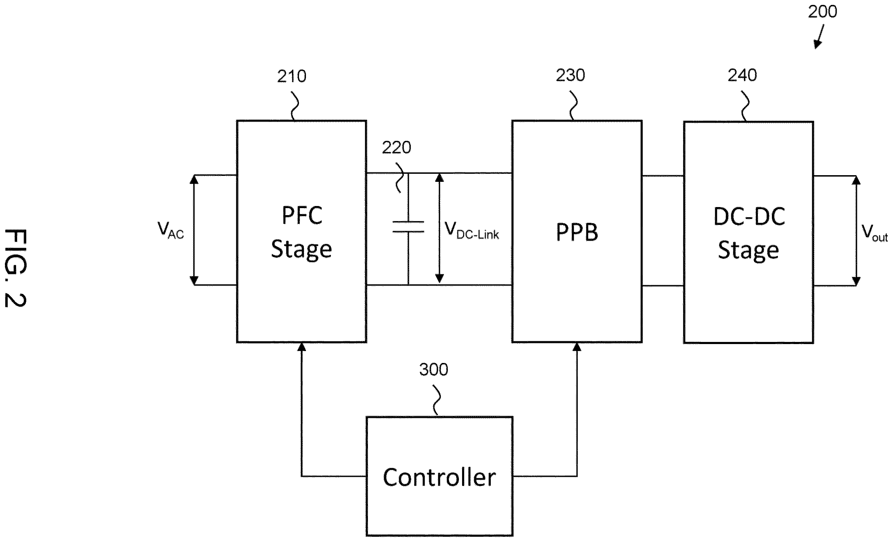

Accordingly, FIG. 2 presents a block diagram of a power supply 200 according to an embodiment of the invention. The power supply 200 receives an AC input voltage (V_{AC}) and generates a substantially constant output voltage (Vₒᵤₜ). For example, the power supply may be configured to generate a Vₒᵤₜ of approximately 48V. The power supply comprises a PFC stage 210 including a DC-link capacitor 220, a PPB 230, and an unregulated DC-DC converter 240.

The PFC stage 210 provides a power factor correction function. The PFC stage 210 may be any circuit that increases power factor of the power supply. The PFC stage 210 shapes the input current in order to maximize the real power from the AC supply. In some embodiments, the PFC stage 210 comprises an input node configured to receive the AC input voltage, and a PFC switch arrangement 212 configured to generate an intermediate voltage based on the received AC input voltage. That is, the switch arrangement 212 is controlled to generate an intermediate voltage using the AC input voltage.

The DC-link capacitor 220 is connected across the PFC switch arrangement 212. In other words, the DC-link capacitor 220 is connected in parallel with the PFC stage 210.

The PPB 230 is connected between the PFC stage 210 and the unregulated DC-DC converter 240. The PPB 230 may be a connected in series with the PFC stage 210 and the DC-DC converter 240, or in parallel with the PFC stage 210 and the DC-DC converter 240. The PPB 230 may have a buck, boost, or a buck-boost topology. In any case, the PPB 230 comprises a buffer capacitor 232, an inductor 234, and a PPB switch arrangement 236 configured to control current flowing through the buffer capacitor 232 and the inductor 234.

The unregulated DC-DC converter 240 is configured to receive the DC-link voltage across the DC-link capacitor 220 and to generate an output voltage. The DC-DC converter 240 may be any known DC-DC converter 240 capable of converting an input voltage into an output voltage. The unregulated DC-DC converter 240 thus provides an output voltage in a substantially fixed ratio to the DC-link voltage. That is, the unregulated DC-DC converter 240 provides a constant conversion ratio between the voltage on the DC-link capacitor 220 and the output. Of course, the DC-DC converter 240 may be configurable to provide a different conversion ratio, but during normal operation the DC-DC converter 240 may not alter its operation based on the voltage across the DC-link capacitor 220.

Importantly, the PFC stage 210 is configured to regulate a voltage across the buffer capacitor 232. Meanwhile, the PPB 230 is configured to regulate the DC-link voltage across the DC-link capacitor 220. That is, the operation of the PFC stage 210 dictates the voltage across the buffer capacitor 232, whilst operation of the PPB 230 dictates the voltage across the DC-link capacitor 220. As the PPB 230 regulates the voltage across the DC-link capacitor 220, the PPB 230 also therefore regulates the output voltage, as the DC-DC converter 240 is unregulated. Accordingly, by provision of the PPB 230 between the PFC stage 210 and the DC-DC converter 240, the PPB 230 can regulate the DC-link voltage, while the PFC can regulate the buffer capacitor 232 voltage.

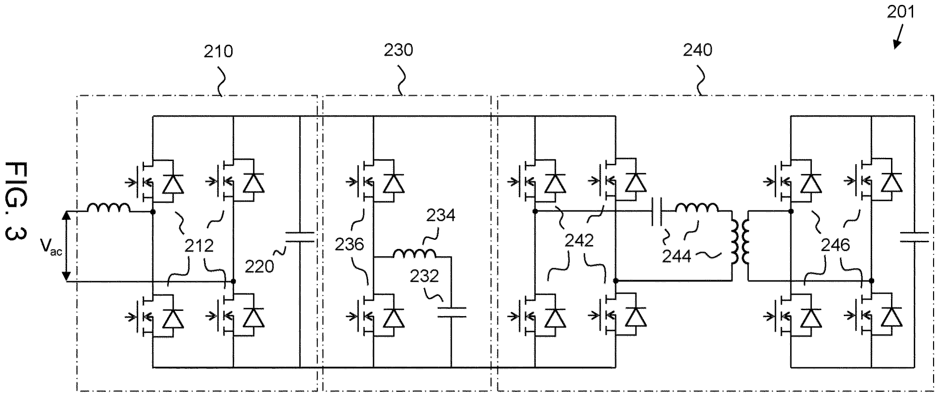

As shown, there may also be provided a controller 300 for the power supply. The controller 300 may be used to control switch arrangements 212, 236 of the PFC 210 and the PPB 230, and may therefore control the PFC to regulate the voltage across the buffer capacitor 232, and the PPB 230 to regulate the voltage across the DC-link capacitor 220. The precise control scheme will depend on the topology of the PFC 210 and the PPB 230 (and their respective switch arrangements). An example will be given below in reference to FIG. 3. However, the skilled person would appreciate and fully understand the control scheme required for the PFC and the PPB 230 to regulate the respective voltages given alternative topologies.

To this end, the controller 300 may be configured to control the PFC switch arrangement 212 based on a measured value of the voltage across the buffer capacitor 232 and a target buffer voltage value. That is, if the voltage across the buffer capacitor 232 varies from a target value, then operation of the PFC switch arrangement 212 may be altered (e.g., by altering the switching frequency of the arrangement or duty cycles of some of the switches in the arrangement) in order to change the voltage across the buffer capacitor 232 toward the target value.

More particularly, the controller 300 may be configured to generate a power reference signal based on a difference between the measured value of the voltage across the buffer capacitor 232 and a target buffer voltage value. The power reference signal indicates the additional (or reduction of) power required to be supplied to the buffer capacitor 232 in order for the buffer capacitor 232 voltage to reach the target buffer voltage value. Then, the controller 300 determines a target current signal describing a target current flowing through the PFC. With increased current flow, the more power supplied to the buffer capacitor 232, and vice versa. Accordingly, the controller 300 will then control the PFC switch arrangement 212 based on the target current signal. That is, if a change in current flowing from the PFC to the buffer capacitor 232 is needed, then operation of the PFC will be altered accordingly.

In some cases, when the output of the unregulated DC-DC converter 240 is connected to a load, the controller 300 is also configured to control the PFC switch arrangement 212 based on a power required by the output load. That is, the controller 300 may adjust operation of the PFC switch arrangement 212 to regulate the voltage across the buffer capacitor 232 responsive to power requirements of the load. As a result, the average power stored by the buffer capacitor 232 may be varied according to the output power by control of the PFC.

In particular, the controller 300 may adjust the target buffer voltage value based on the power required by the output load. The adjusted target voltage value may be identified, for example, by means of a look up table. By adjusting the average voltage across the buffer capacitor 232, an average power may be altered, and therefore PPB losses may be reduced. For example, in light load conditions, the voltage across the buffer capacitor 232 may be brought to zero by switching off the PPB 230, in order to avoid additional losses introduced by the PPB 230.

Moreover, the controller 300 is also configured to control the PPB switch arrangement 236 based on a measured value of the output voltage and a target output voltage value. If the voltage output by the DC-DC converter 240 varies from the target output voltage, then the PPB switch arrangement 236 is controlled to alter the DC-link voltage, which in turn will alter the output voltage (as the DC-DC converter 240 provides a substantially fixed conversion between the DC-link voltage and the output voltage). For example, if the output voltage exceeds the target output voltage value, then operation of the PPB switch arrangement 236 may be changed to reduce the DC-link voltage, and vice versa.

Specifically, the controller 300 may be configured to generate a power reference signal based on a difference between the measured value of output voltage and a target output voltage value. The power reference signal indicates the additional (or reduction of) power required to be supplied to the DC-link capacitor 220 in order for the DC-link voltage to reach a target value (that would result in the DC-DC converter 240 outputting the target output voltage value). The controller 300 determines a target current signal describing a target current flowing through the inductor 234 of the PPB 230, and then controls the PPB switch arrangement 236 based on the target current signal. As a result, the DC-link voltage may be appropriately regulated.

Alternatively, the controller 300 may implement a frequency splitter for controlling the PPB switch arrangement 236 and the PFC switch arrangement 212. When the output of the unregulated DC-DC converter 240 is connected to a load, a power reference signal describing a target power to provide to the load (in order to keep the output voltage at a target value) may be determined. The controller 300 may generate the power reference signal based on a measured value of the output voltage, for example.

The frequency splitter may then generate a high frequency power signal describing high frequency components of the power reference signal, and a low frequency power signal describing low frequency components of a power reference signal. The PPB switch arrangement 236 is then controlled by the controller 300 based on the high frequency power signal, and the PFC switch arrangement 212 is controlled based on the low frequency power signal.

The controller 300 may be configured to control the PFC switch arrangement 212 further based on a target buffer voltage value. Thus, the controller 300 combines the target buffer voltage value and the low frequency power signal, so that the average voltage across the buffer capacitor 232 is maintained at a target value.

Furthermore, the controller 300 may also be configured to control the PPB switch arrangement 236 further based on an AC power feedforward signal describing an expected power fluctuation of the PFC stage 210. Accordingly, the high frequency power signal and the AC power feedforward signal may be combined in order to determine control of the PPB switch arrangement 236.

In other words, the controller 300 in this embodiment aims to provide a constant output voltage as a power required by the load varies. Accordingly, a power reference signal is generated based on a measured output voltage. The controller 300 then splits the power reference signal into a low frequency and a high frequency part, using a frequency splitter.

The low frequency power signal is used to control the PFC switch arrangement 212, for example by generating a current reference signal indicating current to be drawn from the input, based on which the switch arrangement 212 of the PFC may be appropriately controlled (to draw the appropriate current as described by the current reference signal). In order to keep the average voltage of the buffer capacitor 232 at a certain value, the current reference signal may also be based on a target buffer capacitor 232 voltage.

The high frequency power signal may be combined with an AC power feedforward which anticipates the power fluctuation of the DC-link capacitor 220. This combined power signal is used by the controller 300 to control the PPB switch arrangement 236, for example by generating a current reference indicating current to be induced through the inductor 234 of the PPB 230, based on which the PPB switch arrangement 236 may be appropriately controlled (to enable appropriate current to flow through the inductor 234).

In essence, the above-described topology and control schemes provide for tight regulation of the output voltage without requiring regulation of the DC-DC converter 240, and without need for a large DC-link capacitor 220. Indeed, the buffer capacitor 232 of the PPB 230 provides for short term variations in input voltage or required output voltage (e.g., input supply drop out, load spikes, etc.), whilst the control of the PPB 230 enable the DC-link voltage to stay at a near-constant value. In other words, the PPB 230 and buffer capacitor 232 may react quickly to short-term, high frequency, variations in power requirements. Meanwhile, the PFC stage 210 ensures that the voltage of the buffer capacitor 232 remains at a required value, and reacts appropriately to longer-term, low frequency, variations in power requirements.

By way of further explanation, FIG. 3 is a circuit diagram of a power supply 201 according to an exemplary embodiment of the invention.

As shown, the PFC stage 210 is an AC-DC PFC stage 210, such as a totem pole PFC circuit, comprising a switch arrangement 212 including four switches in a full bridge configuration.

The PPB 230 is connected in parallel with the PFC stage 210 and the unregulated DC-DC converter 240. The presented PPB 230 is parallel connected, in a buck configuration. The switch arrangement 236 of the PPB 230 comprises a high-side switch and a low-side switch connected in series across (i.e., in parallel with) the DC-link capacitor 220. The buffer capacitor 232 and the inductor 234 are connected in series across (i.e., in parallel with) the low-side switch.

The unregulated DC-DC converter 240 of the depicted embodiment is an isolated and unregulated LLC converter (also referred to as DCX) comprising a switching bridge 242, a transmitter circuit 244, and a rectifier circuit 246. The switching bridge 242 is configured to receive the DC-link voltage across the DC-link capacitor 220 and generate an alternating voltage based on the DC-link voltage. The switching bridge 242 is configured to operate at a substantially fixed frequency. That is, the DC-DC converter 240 works at a fixed switching frequency, approximately equal to the resonance frequency for increased efficiency. In this case the switching bridge 242 is a full-bridge switching circuit, but other topologies may be employed.

The transmitter circuit 244 comprises a transformer including a primary side winding and a secondary side winding, and a resonant tank connected between the switching bridge 242 and the primary side winding. The transmitter circuit 244 is configured to receive the alternating voltage (usually alternating at or near the resonant frequency of the resonant tank), and to generate a further alternating voltage on the secondary winding based on the received alternating voltage. In this case, the resonant tank comprises a resonant capacitor and a resonant inductor 234 connected in series with the primary winding (i.e., is an LLC resonant tank). Once again, alternative topologies may be employed. For example, the resonant tank may be an LCC-based resonant tank, and the primary and secondary windings may not be isolated.

Finally, the rectifier circuit 246 is configured to receive the further alternating voltage, and to generate an output voltage based on the further alternating intermediate voltage. As shown, the rectifier circuit 246 may be an active full-bridge rectifier circuit 246. Nevertheless, this rectifier circuit 246 may be replaced by a different topology and the switches may be replaced by passive components.

To be clear, the depicted components are selected by way of example only to demonstrate a full working circuit of the power supply 201. Alternative topologies and components may be employed depending on application and other factors.

As above, the advantage of the depicted circuit is that the double-line frequency power pulsation of the PFC stage 210 is buffered by the buffer capacitor 232 (leading to a large variation of the buffer capacitor 232 voltage) and not by the DC-link capacitor 220. The voltage across the DC-link capacitor 220 can therefore be kept at a tightly regulated value. This enables the usage of an unregulated DC-DC converter 240 since the dynamic response of the PPB 230 to changes in the DC-link voltage is very high.

The power supply 201 is controlled in such a way that the PFC regulates the voltage of the buffer capacitor 232, while the PPB 230 regulates the DC-link voltage. For example, a power reference signal for the PFC (i.e., a signal indicating a power required to be drawn by the PFC) is generated based on the deviation of the voltage across the buffer capacitor 232 from a setpoint. This power reference signal is used to generate a current reference signal indicating a current to be drawn by the PFC from the input, which is then used to control the switch arrangement 212 of the PFC in an appropriate manner to draw the required power.

For controlling the output voltage, the DC-link voltage is regulated. Specifically, a power reference signal for the PPB 230 (i.e., a signal indicating a power required by the output for the output voltage to be equal to a target voltage) is generated based on the deviation of the output voltage from a given setpoint. This power reference is used to generate a current reference signal indicating a current to be provided through the inductor 234 current of the PPB 230, which is then used to control the switch arrangement 236 of the PPB 230 in an appropriate manner to provide sufficient power to the DC-link capacitor 220.

There may be additional feedforward signals in control loops for speeding up transient responses, such as from the load power and the AC power part of the PFC. Additionally, a line cycle dropout detection may be performed. Accordingly, when a line cycle dropout is detected, some of these feedforward signals are disabled in case of the loss of the line voltage.

As an additional control feature to improve the system efficiency, the average voltage of the buffer capacitor 232 may be varied according to the required output power (e.g., by means of a look-up table). At low output power, the voltage ripple on the buffer capacitor 232 is small. In this case, the average voltage of the buffer capacitor 232 can be increased, which in turn decreases the current in the inductor 234, and thus also the conduction and switching losses of the PPB stage 230. This approach might be also used to facilitate zero volt switching for the PPB stage 230 for all load conditions by varying the switching frequency of the switch arrangement 236 of the PPB 230. Thus, the PPB 230 is always operated at the lowest possible losses. In addition, at very light load conditions, the PPB 230 might be switched off in order to avoid the additional losses introduced by the PPB stage 230.

Moreover, it should be noted that the power supply 201 is inherently capable of handling short times of overload, since the unregulated DC-DC converter 240 does not have an upper saturation limit of current, as it utilizes the leakage inductance of the transformer as resonant inductance. This is different to regulated LLC or DAB converters, which have an extra series inductor that can potentially saturate during overload. In the power supply 201 depicted in FIG. 3, the PPB stage 230 would provide more power during overload. Since the inductor 234 of the PPB 230 is designed to provide full power during hold-up time until the buffer capacitor 232 is discharged to a threshold level, the current handling capability of this inductor 234 is high enough that the overload situations can be handled easily.

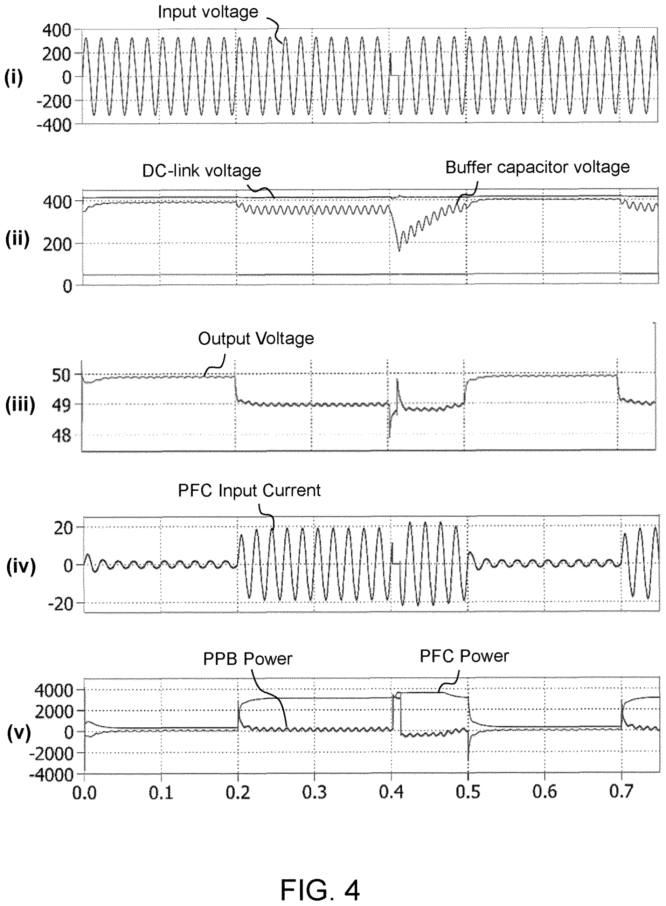

In order to verify expected operation of the power supply 201 of FIG. 3, a simulation was performed as 3kW single phase rectifier with 50V output voltage. The result of this is presented in FIG. 4, with the waveform of various parameters of the power supply 201 shown as the power supply 201 operates under load jumps and a line cycle drop out. In particular, graph (i) presents the input voltage over time, graph (ii) presents the DC-link voltage and the buffer capacitor voltage over time, graph (iii) presents the output voltage over time, graph (iv) presents input current drawn by the PFC over time, and graph (v) presents the PFC power and the PPB power over time.

In the simulation, at 0.2s, a load jump was applied from 10% to 100% of output power (i.e., 300W to 3kW). As seen in graph (ii), the voltage across the buffer capacitor 232 drops slightly and stabilises quickly. There is also a small drop (from 50V to 49V) of the output voltage as shown in graph (iii), according to the droop function required in this application. At 0.4s, a line drop out is experienced (as can be seen in graph (i). As seen in graph (ii), this results in a brief drop in the buffer capacitor voltage. In addition, there is a small variation in the output voltage (of around 1V) as shown in graph (iii). At 0.5s a load release from 100% to 10% of output power (i.e., 3kW to 300W) is applied. As seen in graph (iii), the output voltage never drops below 48V, and stable operation is ensured.

Graph (v) depicts the distribution of the PFC power and the PPB power. It can be seen that the PFC varies its power level with a lower frequency. The high frequency response (incl. the compensation of the 100Hz ripple on the DC-link) is covered by the PPB 230. As can be seen, especially during load jumps (at 0.2s and 0.5s) the PPB 230 reacts very quickly and is not limited by the slow dynamics of the PFC.

FIG. 4 thus confirms that the proposed power supply 201 is capable of providing a stable output voltage under expected load conditions. The power supply 201 is able to act quickly and stably to load jumps, releases, and line dropouts. This is achieved without any active control of the DC-DC converter 240, reducing complexity and cost whilst improving efficiency.

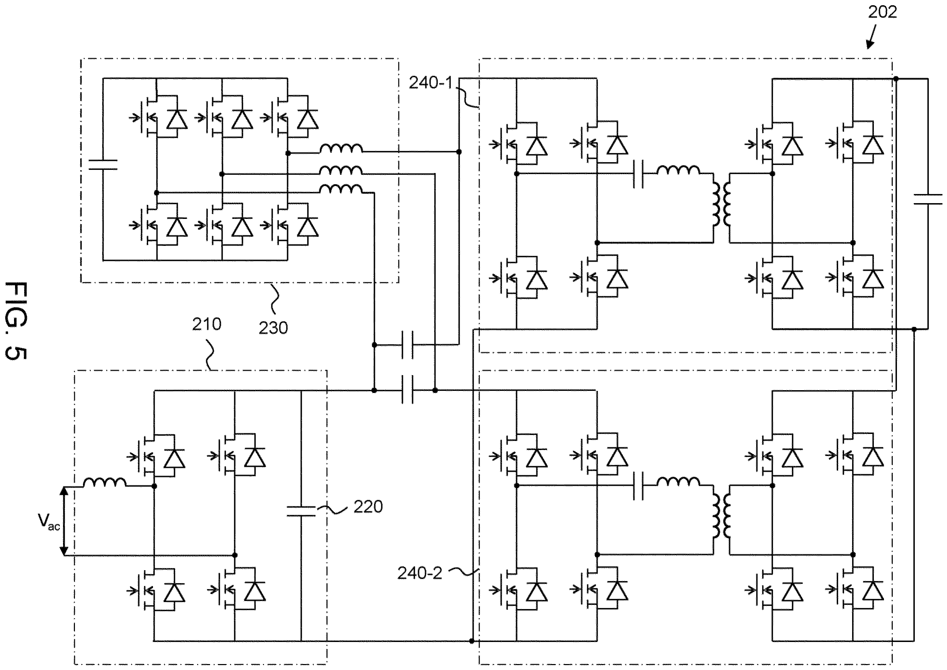

Moving onto FIG. 5, there is provided an extension of the embodiment of the power supply 201 as depicted in FIG. 3. The power supply 202 of FIG. 5 may be particularly suited for high power applications where it is inappropriate to provide the power via a single DC-DC converter.

The depicted circuit comprises two unregulated DC-DC converters 240-1, 240-2. Nevertheless, the concept may be extended to a larger number of DC-DC converters 240-1, 240-2 (or even applied to only one DC-DC converter). The output of each unregulated DC-DC converter may be connected to a common output node as shown. In this case, each DC-DC converter is configured to receive the DC-link voltage across the DC-link capacitor 220 and to generate an output voltage.

In contrast to the circuit shown in FIG. 3, the PPB 230 is implemented as a series PPB 230. That is, the PPB 230 is connected in series between the PFC stage 210 and each respective one of the unregulated DC-DC converters 240-1, 240-2. The PPB 230 comprises a single buffer capacitor 232, an inductor 234, and also an inductor for each of the respective DC-DC converters 240-1, 240-2. The PPB switch arrangement 236 is configured to control current flowing through buffer capacitor 232 and the inductors.

The series PPB 230 may be configured to regulate a voltage provided to each unregulated DC-DC converter. Thus, the PPB 230 decouples the output voltage of the PFC from the input voltage of each unregulated DC-DC converter, and so can also be used as a means to regulate the output voltage of the power supply 202. Since the unregulated DC-DC converters 240-1, 240-2 are uncontrolled, paralleling multiple unregulated DC-DC converters 240-1, 240-2 (e.g., as connected FIG. 3) can lead to unequal power sharing between the parallel systems. This may be due, for instance, to component variations, topological differences or other slight variances between the unregulated converters. Thus, the PPB 230 can be used for to regulate the input voltages to the DC-DC converters 240-1, 240-2 individually to guarantee equal power sharing.

It should be noted that this example may exhibit limited hold up time capability. Therefore, this power supply 202 may be best applied in systems without stringent hold up time requirements, such as battery chargers.

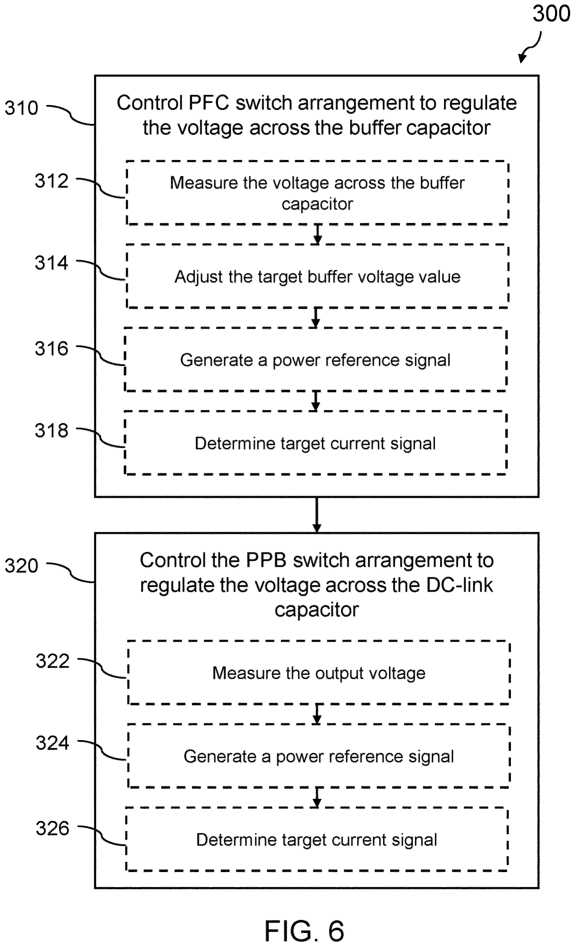

FIG. 6 presents a flow diagram of a method for controlling a power supply according to an embodiment of the invention. Specifically, the method is suitable for controlling the power supply 200 as described in reference to FIG. 1. That is the method is for controlling a power supply comprising a PFC 210, a DC-link capacitor 220 connected across the PFC switch arrangement, an unregulated DC-DC converter 240, and a PPB 230 connected between the PFC stage 210 and the unregulated DC-DC converter 240.

As above, the PFC 210 comprises an input node configured to receive an AC input voltage, and a PFC switch arrangement 212 configured to generate an intermediate voltage based on the received AC input voltage, The unregulated DC-DC converter 240 is configured to receive a DC-link voltage across the DC-link capacitor 220 and to generate an output voltage. The PPB 230 comprises a buffer capacitor 232, an inductor 234, and a PPB switch arrangement 236 configured to control current flowing through buffer capacitor and the inductor.

In step 310, the PFC switch arrangement is controlled to regulate the voltage across the buffer capacitor. That is, switches of the PFC switch arrangement are controlled according to a scheme that allows control of the buffer capacitor voltage to a certain level.

More specifically, in optional sub-step 312, the voltage across the buffer capacitor is measured. Then, the PFC switch arrangement may be controlled based on a measured value of the voltage across the buffer capacitor and a target buffer voltage value. As a result, when the voltage across the buffer capacitor varies from the target buffer voltage value, the PFC switch arrangement will be appropriately controlled such that the voltage across the buffer capacitor changes toward the target buffer voltage value.

In some cases, the method may further involve sub-step 314. In this step, the target buffer voltage value is adjusted based on the power required by the output load (i.e., the load connected to the output of the DC-DC converter). The adjustment may be performed by use of a lookup table, in which various output loads correspond to various target buffer voltage values. This may improve efficiency of the power supply. For example, if the required power is low, the voltage ripple on the buffer capacitor is small, and the target buffer voltage value can be increased (in turn reducing current through the inductor of the PPB, and therefore the conduction and switching losses of the PPB).

In specific embodiments, further optional sub-steps 316 and 318 are performed. Specifically, in step 316 a power reference signal describing a desired power of the PPB is generated based on a difference between the measured value of the voltage across the buffer capacitor and the target buffer voltage value.

In optional sub-step 318, a target current signal describing a target current flowing through the PFC is determined based on the power reference signal. Using this target current signal, the PFC switch arrangement can be controlled. That is, the target current signal describes the current drawn by the PFC from the input, and thus the power supplied to the buffer capacitor. The PFC can therefore be controlled based on this current signal.

In step 320, the PPB switch arrangement is controlled to regulate the voltage across the DC-link capacitor. In other words, switches of the PPB switch arrangement are controlled according to a scheme that allows control of the DC-link voltage to a certain level.

In particular, in optional sub-step 322, the output voltage is measured. Then, the PPB switch arrangement may be controlled based on a measured output voltage and a target output voltage value. To be clear, the DC-link voltage is directly proportional to the output voltage (by virtue of the fixed conversion of the DC-DC converter), and therefore the output voltage is simple to translate to the DC-link voltage. As a result, when the output voltage varies from the target output voltage, the PFC switch arrangement will be appropriately controlled such that the voltage across the DC-link capacitor changes, which in turn varies the output voltage toward the target output voltage value.

In specific embodiments, further optional sub-steps 324 and 326 are performed. Specifically, in step 324 a power reference signal describing a desired power to be provided to the DC-link capacitor is generated based on a difference between the measured value of the voltage across the output voltage and the target output voltage value.

In optional sub-step 326, a target current signal describing a target current flowing through the inductor is determined based on the power reference signal. Using this target current signal, the PPB switch arrangement can be controlled.

Although specific examples have been illustrated and described herein, it will be appreciated by those of ordinary skill in the art that a variety of alternate and/or equivalent implementations may be substituted for the specific examples shown and described without departing from the scope of the present invention. This application is intended to cover any adaptations or variations of the specific examples discussed herein. Therefore, it is intended that this invention be limited only by the claims and the equivalents thereof.

It should be noted that the methods and devices including its preferred embodiments as outlined in the present document may be used stand-alone or in combination with the other methods and devices disclosed in this document. In addition, the features outlined in the context of a device are also applicable to a corresponding method, and vice versa. Furthermore, all aspects of the methods and devices outlined in the present document may be arbitrarily combined. In particular, the features of the claims may be combined with one another in an arbitrary manner.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiments outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

The following embodiments are disclosed:
1. A power supply, comprising:
   a power factor correction, PFC, stage comprising an input node configured to receive an AC input voltage, a PFC switch arrangement configured to generate an intermediate voltage based on the received AC input voltage, and a DC-link capacitor connected across the PFC switch arrangement;
   an unregulated DC-DC converter configured to receive a DC-link voltage across the DC-link capacitor and to generate an output voltage; and
   a power pulsation buffer, PPB, connected between the PFC stage and the unregulated DC-DC converter, the PPB comprising a buffer capacitor, an inductor, and a PPB switch arrangement configured to control current flowing through buffer capacitor and the inductor,
   wherein the PFC stage is configured to regulate a voltage across the buffer capacitor and the PPB is configured to regulate the DC-link voltage across the DC-link capacitor.
2. The power supply of embodiment 1, wherein the PPB is connected in parallel with the PFC stage and the unregulated DC-DC converter.
3. The power supply of embodiment 2, wherein the PPB is connected in a buck configuration, and wherein the PPB switching arrangement comprises a high-side switch and a low-side switch connected in series across the DC-link capacitor, and the buffer capacitor and the inductor are connected in series across the low-side switch.
4. The power supply of any of embodiments 1-3, further comprising:
   a plurality of unregulated DC-DC converters, each configured to receive the DC-link voltage across the DC-link capacitor and to generate an output voltage;
   a PPB connected in series between the PFC stage and each respective one of the unregulated DC-DC converters, and comprising a buffer capacitor, an inductor for each of the respective DC-DC converters, and a PPB switch arrangement configured to control current flowing through buffer capacitor and the inductors.
5. The power supply of embodiment 4, wherein the PPB is configured to regulate a voltage provided to each DC-DC converter.
6. The power supply of embodiment 4 or 5, wherein the output of each unregulated DC-DC converter is connected to a common output node.
7. The power supply of any of embodiments 1-6, wherein the PFC stage is a full-bridge PFC stage.
8. The power supply of any of embodiments 1-7, wherein the unregulated DC-DC converter comprises:
   a switching bridge configured to receive the DC-link voltage across the DC-link capacitor and generate an alternating voltage based on the DC-link voltage, wherein the switching bridge is configured to operate at a substantially fixed frequency;
   a transmitter circuit comprising a transformer including a primary side winding and a secondary side winding, and a resonant tank connected between the switching bridge and the primary side winding, the transmitter circuit configured to receive the alternating voltage, and to generate a further alternating voltage on the secondary winding based on the received alternating voltage; and
   a rectifier circuit configured to receive the further alternating voltage, and to generate an output voltage based on the further alternating intermediate voltage.
9. The power supply of embodiment 8, wherein the resonant tank comprises a resonant capacitor and a resonant inductor connected in series with the primary winding.
10. The power supply of embodiment 8 or 9, wherein the rectifier circuit is a full-bridge rectifier circuit.
11. The power supply of embodiment 8 or 9, wherein the switching bridge is a full-bridge switching circuit.
12. A controller for a power supply, the power supply comprising a power factor correction, PFC, stage comprising an input node configured to receive an AC input voltage, a PFC switch arrangement configured to generate an intermediate voltage based on the received AC input voltage, and a DC-link capacitor connected across the PFC switch arrangement; an unregulated DC-DC converter configured to receive a DC-link voltage across the DC-link capacitor and to generate an output voltage; and a power pulsation buffer, PPB, connected between the PFC stage and the unregulated DC-DC converter, the PPB comprising a buffer capacitor, an inductor, and a PPB switch arrangement configured to control current flowing through buffer capacitor and the inductor, the controller configured to:
   control the PFC switch arrangement to regulate the voltage across the buffer capacitor; and
   control the PPB switch arrangement to regulate the voltage across the DC-link capacitor.
13. The controller of embodiment 12, wherein the controller is configured to control the PFC switch arrangement based on a measured value of the voltage across the buffer capacitor and a target buffer voltage value.
14. The controller of embodiment 12 or 13, wherein the controller is configured to:
   generate a power reference signal based on a difference between the measured value of the voltage across the buffer capacitor and a target buffer voltage value;
   determine a target current signal describing a target current flowing through the PFC (210); and
   control the PFC switch arrangement based on the target current signal.
15. The controller of embodiments 12-14, wherein the output of the unregulated DC-DC converter is connected to a load, and wherein the controller is configured to control the PFC switch arrangement based on a power required by the output load.
16. The controller of embodiment 15, wherein the controller is configured to:
   control the PFC switch arrangement based on the measured value of the voltage across the buffer capacitor and a target buffer voltage value; and
   adjust the target buffer voltage value based on the power required by the output load.
17. The controller of any of embodiments 12-16, wherein the controller is configured to control the PPB switch arrangement based on a measured value of output voltage and a target output voltage value.
18. The controller of embodiment 17, wherein the controller is configured to:
   generate a power reference signal based on a difference between the measured value of output voltage and a target output voltage value;
   determine a target current signal describing a target current flowing through the inductor; and
   control the PPB switch arrangement based on the target current signal.
19. A controller for a power supply, the power supply comprising a power factor correction, PFC, stage comprising an input node configured to receive an AC input voltage, a PFC switch arrangement configured to generate an intermediate voltage based on the received AC input voltage, and a DC-link capacitor connected across the PFC switch arrangement; an unregulated DC-DC converter configured to receive a DC-link voltage across the DC-link capacitor and to generate an output voltage, the output of the unregulated DC-DC converter is connected to a load; and a power pulsation buffer, PPB, connected between the PFC stage and the unregulated DC-DC converter, the PPB comprising a buffer capacitor, an inductor, and a PPB switch arrangement configured to control current flowing through buffer capacitor and the inductor, the controller configured to:
   generate a high frequency power signal describing high frequency components of a power reference signal describing a target power to provide to the load and a low frequency power signal describing low frequency components of the power reference signal;
   control the PPB switch arrangement based on the high frequency power signal; and
   control the PFC switch arrangement based on the low frequency power signal.
20. The controller of embodiment 19, wherein the controller is configured to generate, based on a measured value of the output voltage, the power reference signal.
21. The controller of embodiment 19 or 20, wherein the controller is configured to control the PFC switch arrangement further based on a target buffer voltage value.
22. The controller of embodiment 19 or 20, wherein the controller is configured to control the PPB switch arrangement further based on an AC power feedforward signal describing an expected power fluctuation of the PFC stage.
23. A method for controlling a power supply, the power supply comprising a power factor correction, PFC, stage comprising an input node configured to receive an AC input voltage, a PFC switch arrangement configured to generate an intermediate voltage based on the received AC input voltage, and a DC-link capacitor connected across the PFC switch arrangement; an unregulated DC-DC converter configured to receive a DC-link voltage across the DC-link capacitor and to generate an output voltage; and a power pulsation buffer, PPB, connected between the PFC stage and the unregulated DC-DC converter, the PPB comprising a buffer capacitor, an inductor, and a PPB switch arrangement configured to control current flowing through buffer capacitor and the inductor, the method comprising:
   controlling the PFC switch arrangement to regulate the voltage across the buffer capacitor; and
   controlling the PPB switch arrangement to regulate the voltage across the DC-link capacitor.
24. A method for a power supply, the power supply comprising a power factor correction, PFC, stage comprising an input node configured to receive an AC input voltage, a PFC switch arrangement configured to generate an intermediate voltage based on the received AC input voltage, and a DC-link capacitor connected across the PFC switch arrangement; an unregulated DC-DC converter configured to receive a DC-link voltage across the DC-link capacitor and to generate an output voltage, the output of the unregulated DC-DC converter is connected to a load; and a power pulsation buffer, PPB, connected between the PFC stage and the unregulated DC-DC converter, the PPB comprising a buffer capacitor, an inductor, and a PPB switch arrangement configured to control current flowing through buffer capacitor and the inductor, the method comprising:
   processing a power reference signal describing a target power to provide to a load connected to the power supply, to generate a high frequency power signal describing high frequency components of the power reference signal and a low frequency power signal describing low frequency components of the power reference signal;
   controlling the PPB switch arrangement based on the high frequency power signal; and
   controlling the PFC switch arrangement based on the low frequency power signal.

## Claims

1. A power supply (200, 201, 202), comprising:
a power factor correction, PFC, stage (210) comprising an input node configured to receive an AC input voltage, a PFC switch arrangement (212) configured to generate an intermediate voltage based on the received AC input voltage, and a DC-link capacitor (220) connected across the PFC switch arrangement;
an unregulated DC-DC converter (240) configured to receive a DC-link voltage across the DC-link capacitor and to generate an output voltage; and
a power pulsation buffer, PPB, (230) connected between the PFC stage and the unregulated DC-DC converter, the PPB comprising a buffer capacitor (232), an inductor (234), and a PPB switch arrangement (236) configured to control current flowing through buffer capacitor and the inductor,
wherein the PFC stage is configured to regulate a voltage across the buffer capacitor and the PPB is configured to regulate the DC-link voltage across the DC-link capacitor.

2. The power supply of claim 1, wherein the PPB (230) is connected in parallel with the PFC stage (210) and the unregulated DC-DC converter (240).

3. The power supply of claim 2, wherein the PPB (230) is connected in a buck configuration, and wherein the PPB switching arrangement (236) comprises a high-side switch and a low-side switch connected in series across the DC-link capacitor (220), and the buffer capacitor (232) and the inductor (234) are connected in series across the low-side switch.

4. The power supply of any of claims 1-3, further comprising:
a plurality of unregulated DC-DC converters (240-1, 240-2), each configured to receive the DC-link voltage across the DC-link capacitor (220) and to generate an output voltage;
a PPB (230) connected in series between the PFC stage (210) and each respective one of the unregulated DC-DC converters, and comprising a buffer capacitor (232), an inductor (234) for each of the respective DC-DC converters, and a PPB switch arrangement (236) configured to control current flowing through buffer capacitor and the inductors.

5. The power supply of claim 4, wherein the PPB (230) is configured to regulate a voltage provided to each DC-DC converter (240-1, 240-2).

6. The power supply of claim 4 or 5, wherein the output of each unregulated DC-DC converter (240-1, 240-2) is connected to a common output node.

7. The power supply of any of claims 1-6, wherein the PFC stage (210) is a full-bridge PFC stage.

8. The power supply of any of claims 1-7, wherein the unregulated DC-DC converter (240) comprises:
a switching bridge (242) configured to receive the DC-link voltage across the DC-link capacitor (220) and generate an alternating voltage based on the DC-link voltage, wherein the switching bridge is configured to operate at a substantially fixed frequency;
a transmitter circuit (244) comprising a transformer including a primary side winding and a secondary side winding, and a resonant tank connected between the switching bridge and the primary side winding, the transmitter circuit configured to receive the alternating voltage, and to generate a further alternating voltage on the secondary winding based on the received alternating voltage; and
a rectifier circuit (246) configured to receive the further alternating voltage, and to generate an output voltage based on the further alternating intermediate voltage.

9. The power supply of claim 8, wherein the resonant tank comprises a resonant capacitor and a resonant inductor connected in series with the primary winding.

10. The power supply of claim 8 or 9, wherein the rectifier circuit (246) is a full-bridge rectifier circuit.

11. The power supply of claim 8 or 9, wherein the switching bridge (242) is a full-bridge switching circuit.

12. A controller (300) for a power supply (200), the power supply comprising a power factor correction, PFC, stage (210) comprising an input node configured to receive an AC input voltage, a PFC switch arrangement (212) configured to generate an intermediate voltage based on the received AC input voltage, and a DC-link capacitor (220) connected across the PFC switch arrangement; an unregulated DC-DC converter (240) configured to receive a DC-link voltage across the DC-link capacitor and to generate an output voltage; and a power pulsation buffer, PPB, (230) connected between the PFC stage and the unregulated DC-DC converter, the PPB comprising a buffer capacitor (232), an inductor (234), and a PPB switch arrangement (236) configured to control current flowing through buffer capacitor and the inductor, the controller configured to:
control the PFC switch arrangement to regulate the voltage across the buffer capacitor; and
control the PPB switch arrangement to regulate the voltage across the DC-link capacitor.

13. The controller of claim 12, wherein the controller is configured to control the PFC switch arrangement (212) based on a measured value of the voltage across the buffer capacitor (232) and a target buffer voltage value.

14. The controller of claim 12 or 13, wherein the controller is configured to:
generate a power reference signal based on a difference between the measured value of the voltage across the buffer capacitor (232) and a target buffer voltage value;
determine a target current signal describing a target current flowing through the PFC (210); and
control the PFC switch arrangement (212) based on the target current signal.

15. The controller of claims 12-14, wherein the output of the unregulated DC-DC converter (240) is connected to a load, and wherein the controller is configured to control the PFC switch arrangement (212) based on a power required by the output load.

16. The controller of claim 15, wherein the controller is configured to:
control the PFC switch arrangement (212) based on the measured value of the voltage across the buffer capacitor (232) and a target buffer voltage value; and
adjust the target buffer voltage value based on the power required by the output load.

17. The controller of any of claims 12-16, wherein the controller is configured to control the PPB switch arrangement (236) based on a measured value of output voltage and a target output voltage value.

18. The controller of claim 17, wherein the controller is configured to:
generate a power reference signal based on a difference between the measured value of output voltage and a target output voltage value;
determine a target current signal describing a target current flowing through the inductor (234); and
control the PPB switch arrangement (236) based on the target current signal.

19. A method (300) for controlling a power supply (200), the power supply comprising a power factor correction, PFC, stage (210) comprising an input node configured to receive an AC input voltage, a PFC switch arrangement (212) configured to generate an intermediate voltage based on the received AC input voltage, and a DC-link capacitor (220) connected across the PFC switch arrangement; an unregulated DC-DC converter (240) configured to receive a DC-link voltage across the DC-link capacitor and to generate an output voltage; and a power pulsation buffer, PPB, (230) connected between the PFC stage and the unregulated DC-DC converter, the PPB comprising a buffer capacitor (232), an inductor (234), and a PPB switch arrangement (236) configured to control current flowing through buffer capacitor and the inductor, the method comprising:
controlling (310) the PFC switch arrangement to regulate the voltage across the buffer capacitor; and
controlling (320) the PPB switch arrangement to regulate the voltage across the DC-link capacitor.

## Amended claims

### Amended claims in accordance with Rule 137(2) EPC.

1. A power supply (200, 201, 202), comprising:
a power factor correction, PFC, stage (210) comprising an input node configured to receive an AC input voltage, a PFC switch arrangement (212) configured to generate an intermediate voltage based on the received AC input voltage, and a DC-link capacitor (220) connected across the PFC switch arrangement;
an unregulated DC-DC converter (240) configured to receive a DC-link voltage across the DC-link capacitor and to generate an output voltage; and
a power pulsation buffer, PPB, (230) connected between the PFC stage and the unregulated DC-DC converter, the PPB comprising a buffer capacitor (232), an inductor (234), and a PPB switch arrangement (236) configured to control current flowing through buffer capacitor and the inductor,
wherein the PFC stage is configured to regulate a voltage across the buffer capacitor and the PPB is configured to regulate the DC-link voltage across the DC-link capacitor.

2. The power supply of claim 1, wherein the PPB (230) is connected in parallel with the PFC stage (210) and the unregulated DC-DC converter (240).

3. The power supply of claim 2, wherein the PPB (230) is connected in a buck configuration, and wherein the PPB switching arrangement (236) comprises a high-side switch and a low-side switch connected in series across the DC-link capacitor (220), and the buffer capacitor (232) and the inductor (234) are connected in series across the low-side switch.

4. The power supply of any of claims 1-3, further comprising:
a plurality of unregulated DC-DC converters (240-1, 240-2), each configured to receive the DC-link voltage across the DC-link capacitor (220) and to generate an output voltage;
a PPB (230) connected in series between the PFC stage (210) and each respective one of the unregulated DC-DC converters, and comprising a buffer capacitor (232), an inductor (234) for each of the respective DC-DC converters, and a PPB switch arrangement (236) configured to control current flowing through buffer capacitor and the inductors.

5. The power supply of claim 4, wherein the PPB (230) is configured to regulate a voltage provided to each DC-DC converter (240-1, 240-2).

6. The power supply of claim 4 or 5, wherein the output of each unregulated DC-DC converter (240-1, 240-2) is connected to a common output node.

7. The power supply of any of claims 1-6, wherein the PFC stage (210) is a full-bridge PFC stage.

8. The power supply of any of claims 1-7, wherein the unregulated DC-DC converter (240) comprises:
a switching bridge (242) configured to receive the DC-link voltage across the DC-link capacitor (220) and generate an alternating voltage based on the DC-link voltage, wherein the switching bridge is configured to operate at a substantially fixed frequency;
a transmitter circuit (244) comprising a transformer including a primary side winding and a secondary side winding, and a resonant tank connected between the switching bridge and the primary side winding, the transmitter circuit configured to receive the alternating voltage, and to generate a further alternating voltage on the secondary winding based on the received alternating voltage; and
a rectifier circuit (246) configured to receive the further alternating voltage, and to generate an output voltage based on the further alternating intermediate voltage.

9. The power supply of claim 8, wherein the resonant tank comprises a resonant capacitor and a resonant inductor connected in series with the primary winding.

10. The power supply of claim 8 or 9, wherein the rectifier circuit (246) is a full-bridge rectifier circuit.

11. The power supply of claim 8 or 9, wherein the switching bridge (242) is a full-bridge switching circuit.

12. The power supply of any of claims 1-11, further comprising a controller (300) configured to:
control the PFC switch arrangement (212) to regulate the voltage across the buffer capacitor (232); and
control the PPB switch arrangement (236) to regulate the voltage across the DC-link capacitor (220).

13. The power supply of claim 12, wherein the controller is configured to control the PFC switch arrangement (212) based on a measured value of the voltage across the buffer capacitor (232) and a target buffer voltage value.

14. The power supply of claim 12 or 13, wherein the controller is configured to:
generate a power reference signal based on a difference between the measured value of the voltage across the buffer capacitor (232) and a target buffer voltage value;
determine a target current signal describing a target current flowing through the PFC (210); and
control the PFC switch arrangement (212) based on the target current signal.

15. The power supply of any of claims 12-14, wherein the output of the unregulated DC-DC converter (240) is connected to a load, and wherein the controller is configured to control the PFC switch arrangement (212) based on a power required by the output load.

16. The power supply of claim 15, wherein the controller is configured to:
control the PFC switch arrangement (212) based on the measured value of the voltage across the buffer capacitor (232) and a target buffer voltage value; and
adjust the target buffer voltage value based on the power required by the output load.

17. The power supply of any of claims 12-16, wherein the controller is configured to control the PPB switch arrangement (236) based on a measured value of output voltage and a target output voltage value.

18. The power supply of claim 17, wherein the controller is configured to:
generate a power reference signal based on a difference between the measured value of output voltage and a target output voltage value;
determine a target current signal describing a target current flowing through the inductor (234); and
control the PPB switch arrangement (236) based on the target current signal.

19. A method (300) for controlling a power supply (200), the power supply comprising a power factor correction, PFC, stage (210) comprising an input node configured to receive an AC input voltage, a PFC switch arrangement (212) configured to generate an intermediate voltage based on the received AC input voltage, and a DC-link capacitor (220) connected across the PFC switch arrangement; an unregulated DC-DC converter (240) configured to receive a DC-link voltage across the DC-link capacitor and to generate an output voltage; and a power pulsation buffer, PPB, (230) connected between the PFC stage and the unregulated DC-DC converter, the PPB comprising a buffer capacitor (232), an inductor (234), and a PPB switch arrangement (236) configured to control current flowing through buffer capacitor and the inductor, the method comprising:
controlling (310) the PFC switch arrangement to regulate the voltage across the buffer capacitor; and
controlling (320) the PPB switch arrangement to regulate the voltage across the DC-link capacitor.
